# EUROPEAN PATENT SPECIFICATION

(11) **EP 1 312 771 B1**
(45) Date of publication and mention of the grant of the patent: **02.02.2005**
(21) Application number: 02025799.4
(22) Date of filing: 18.11.2002
(51) Int. Cl.: F01K 9/00, F01K 23/10, F02C 6/18

(54) **Process for condensing steam of a steam turbine**
Verfahren zur Dampfkondensation bei einer Dampfturbine
Procédé pour condenser la vapeur d'une turbine à vapeur

(30) Priority: 19.11.2001 IT PR20010080
(43) Date of publication of application: 21.05.2003
(73) Proprietor: Amps S.p.a., 43100 Parma (IT); Enelpower S.p.a., 20123 Milano (IT)
(72) Inventor: Guatelli, Giacomo, 43022 Montechiarugolo (Parma) (IT); Todisco, Pietro, 20044 Bernareggio (Milano) (IT)
(74) Representative: Guareschi, Antonella

(56) References cited:
- DE-A- 2 314 477
- US-A- 4 677 307
- US-A- 4 693 072
- US-A- 5 622 044

## Description

The present invention relates to a process for condensing steam from a low-pressure turbine combined cycle thermal power plant with a gas turbine known as CCGT power plant.

As it is known combined cycle power plant supply electric power by one or more electric alternators driven by a gas turbine and/or a multistage steam turbine with drops of high, medium, and low-pressure.

The steam for driving turbines is obtained by systems (heat exchangers) for recovering heat from hot combustion gases exiting the turbine before being discharged into the atmosphere through a stack.

The efficiency of the electric power production is maximized in the following way: steam discharged by the low-pressure turbine stage through two pressure drops in turbine portions known as "high" and "medium" pressure respectively, must be condensed at the lowest temperature obtainable with outer cooling means.

To this end condensing means are used (surface condensers) whose condensing medium is loop water cooled by towers or air.

Air condensing systems, particularly during summertime (mid-season and summer periods) have a critical drawback in that the steam condensing pressure is much higher than that in water condensing systems.

This due to the fact that the air dry-bulb temperature is always higher than the wet-bulb temperature (the temperature which is approximated when condensing water is cooled by towers).

Moreover, apart from the electric power throughput losses due to the abovementioned higher steam condensing pressure and temperature, (these losses amount to 2-3% of the total production) the power consumption is also higher than that of the abovementioned water condensing system due to the forced-circulated air and the investment cost for setting up the condensing plant is high.

Water condensing apparatuses however suffer from the following drawbacks and disadvantages:
- it is almost impossible to use spring water in the cooling systems because the great quantities requested by them not only affect negatively the hydrogeological balance of the interested site but also the surrounding area,
- the sustained availability of waters coming from surface streams which must be processed (with corresponding increased cost) before being industrially used.

The water coming from the two above mentioned sources, exits the CCGT power plant at a temperature much higher than that at its entry causing initially a thermal pollution of the environment.

US 4 677 307 A discloses a CCGT power plant and a process for the realization of cogenerative supply of electricity and heat. US 5 622 044 A discloses a CCGT power plant comprising the feature of the preambule of claim 1.

Therefore the object of the present invention is to avoid said disadvantages due to the use, as a condensing medium, of air (with the corresponding heavy losses in power production) and water coming from the abovementioned sources: ground waters, rivers, and/or surface streams.

These and other objects are fully achieved by the process for condensing spent steam from a low-pressure turbine of a combined cycle power plant with gas turbine, as claimed in the appended claim 1.

These and other characteristics will be better understood from the following description of a preferred embodiment shown, in an illustrative and non-limiting way, in the attached drawings, wherein:

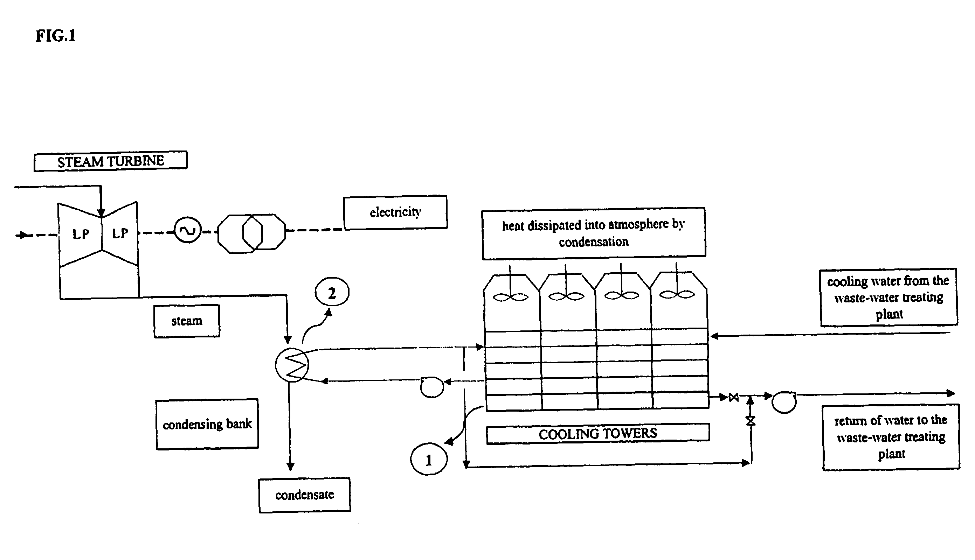

Figure 1 shows the process with a block diagram;

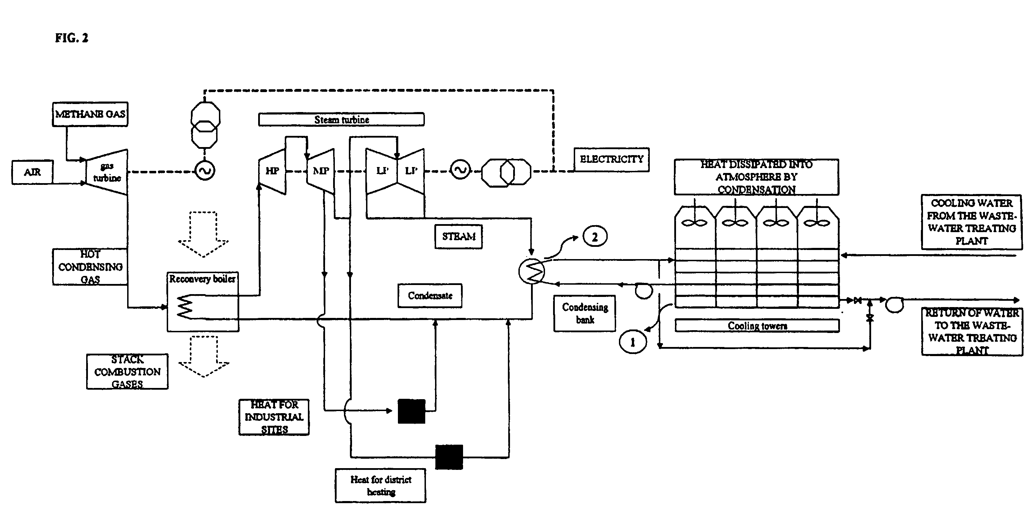

Figure 2 is a more general block diagram of a CCGT power plant.

The process of the invention is used in a CCGT-type thermal power plant wherein reference number 1 shows water cooling towers for condensing spent steam in a bank of surface condensers 2.

Condensing water is circulated through the bank of surface condensers 2 where it absorbs latent heat of spent steam in the condensation step.

The cooling towers 1 are advantageously supplied by water coming from a waste-water treatment plant.

The quantity of water entering the hydraulic circuit of towers 1 must be enough both to offset the portion evaporated in the cooling towers 1 and, as soon as it warms up, to keep the thermal balance of the waste-water treatment plant.

The attendant general temperature increase, in the waste-water treatment plant, promotes the kinetics of the biochemical reactions underlying the waste-water treatment process.

In particular, the higher temperature in the biological activated-sludge reactor of the waste-water treatment plant promotes the kinetics and the progress of the denitration reaction which is mostly jeopardized in wintertime.

Besides that, the capability of accelerating and keeping the reaction kinetics and of having an almost constant profile of waters year-round (since it is possible to extract warm water from the hydraulic circuit of the towers as desired) allows:
- to produce smaller quantities of activated sludge reducing in this way the cost of processing and disposing of the same,
- to increase the operative capacity of the waste-water treatment plant thanks to the faster reaction kinetics,
- to keep constant the operative balance (reaction times and temperatures) of the waste-water treatment plant year-round with attendant improvement of the plant operation.

The important advantages obtained using water coming from waste-water treatment plant are the following:
- it is avoided the use of waters coming both from wells (and its negative effect on the hydrogeological balance not only in the interested site but also the surrounding area) and from surface streams (provided they exist owing to the large quantities requested) and the consequent additional cost for treating the same before their use,
- the reuse of waters already treated that then will return to the surface hydraulic circuit,
- the water treatment process is positively affected thanks to warm waters coming from the circuit of the cooling towers and returning to the waste-water treatment plant. In this way it is obtained a faster reaction kinetics and the abovementioned advantages,
- higher amounts of electric power produced than those obtained by power plants using air condensing systems due to lower condensing pressure and temperature of the discharged steam from the low-pressure stage of the turbine, this increase can amount to 2-3% of the total yearly output.
- the power consumption is lower than that of the air condensing system
- lower investment costs for setting up condensing plants.

## Claims

1. Process for condensing steam from a low pressure turbine of a combined-cycle thermal power plant with a gas turbine, comprising the step of:
supplying cooling towers (1) with water from a waste-water treatment plant,
circulating said water through a bank of surface condensers (2) where it absorbs latent heat of spent steam from a low pressure steam turbine,
cooling said water in said cooling towers (1),
**characterized by** the step of
reusing the warm water flowing out of a hydraulic circuit of said cooling towers (1) in the waste-water treatment plant in order to optimize treatment processes.

## Patentansprüche

1. Verfahren zum Kondensieren von Dampf aus einer Niederdruckturbine einer in einem Zyklus mit einer Gasturbine kombinierten Wärmekraftanlage, welches die Schritte beinhaltet: Kühltürme (1) mit Wasser aus einer Abwasserbehandlungsanlage zu beschicken,
das Wasser über eine Reihe von Oberflächenkondensatoren (2) umlaufen zu lassen, wo es latente Wärme von Abdampf aus einer Niederdruckturbine absorbiert, und
das Wasser in den Kühltürmen (1) abzukühlen,
**gekennzeichnet durch** den Schritt
das Wasser, das aus dem hydraulischen Kreis der Kühltürme (1) in der Abwasserbehandlungsanlage fließt, erneut zu verwenden, um die Behandlungsverfahren zu optimieren.

## Revendications

1. Procédé de condensation de vapeur d'une turbine à basse pression d'une centrale électrique thermique avec une turbine à gaz, comprenant les phases de:
- alimentation de tours de refroidissement (1) en eau provenant d'une installation de traitement d'eaux usées,
- circulation de ladite eau au travers d'un banc de condensateurs de surface (2) où elle absorbe la chaleur latente de la vapeur morte provenant d'une turbine à vapeur à basse pression,
- refroidissement de ladite eau dans lesdites tours de refroidissement (1),
**caractérisé par** la phase de
réutilisation de l'eau chaude fluant hors d'un circuit hydraulique desdites tours de refroidissement (1) dans l'installation de traitement d'eaux usées de manière à optimiser les procédés de traitement.
